# DEMANDE DE BREVET EUROPEEN

(11) **EP 0 774 487 A1**
(43) Date de publication de la demande: **21.05.1997**
(21) Numéro de dépôt: 96400447.7
(22) Date de dépôt: 01.03.1996
(51) Int. Cl.: C08L 23/02, C08K 5/098, C08K 3/26, H01B 3/44

(54) **Composition à haute résistance à la propagation du feu**

(30) Priorité: 11.11.1995 DE 19542157
(71) Demandeur: Alcatel Kabel AG & Co., 30179 Hannover (DE)
(72) Inventeur: Prigent, Madeleine, 91460 Marcoussis (FR); Chaillie, Alain, 91680 Bruyeres le Chatel (FR)
(74) Mandataire: Feray, Valérie

(57) **Abrégé**

Composition à haute résistance à la propagation du feu, comprenant un polymère de revêtement traditionnel d'isolation et/ou de protection de câbles, appelé matériau de base, dans lequel sont incorporés :
- une charge sous forme d'un composé ni hydroxyde ni hydraté d'un métal du groupe IIA du tableau périodique des éléments,
- un silicone,
- un sel d'un métal,
**caractérisée en ce que** ledit métal est sélectionné parmi le calcium, le magnésium, le baryum, le strontium, le thallium et le cérium, et en ce que ledit sel est dissocié de ladite charge au sein dudit matériau de base.

## Description

La présente invention concerne une composition à haute résistance à la propagation du feu, destinée en particulier, mais non exclusivement, à la fabrication de câbles et lignes électriques et/ou optiques. Elle concerne plus spécifiquement les compositions incluant les constituants de base suivants :
- un matériau de base (polymère par exemple), notamment utilisé traditionnellement pour le revêtement d'isolation et/ou de protection de câbles,
- une charge sous forme d'un composé ni hydroxyde ni hydraté d'un métal du groupe IIA du tableau périodique des éléments, par exemple le carbonate de calcium CaCO₃,
- un silicone, sous forme par exemple d'huile ou de gomme,
- un sel d'un métal.

De telles compositions ignifuges sont décrites par exemple dans le document FR-2 678 942. Elles ont prouvé leur intérêt en terme de résistance à la propagation de la flamme, caractéristique la plus importante des compositions ignifuges.

On peut proposer une explication du comportement de ces compositions lors d'un incendie:
- la charge en quantité relativement importante (de l'ordre d'une ou de plusieurs dizaines de parts pour 100 parts de matériau de base), constitue à la surface du matériau de base une barrière minérale qui ne brûle pas et ne se décompose pas en cas d'incendie,
- le silicone migre vers la surface du matériau de base (avec lequel il est la plupart du temps largement incompatible) et se décompose sous l'effet de la température en donnant de la silice, qui vient renforcer la barrière minérale formée par la charge,
- le sel de métal migre également vers la surface du matériau de base sous l'effet de la température, et se décompose en donnant notamment un résidu minéral qui lui aussi renforce la barrière minérale ; seule une faible quantité de ce sel est nécessaire pour obtenir un comportement satisfaisant de la composition en cas d'incendie.

Le document EP-0 393 959 concerne des compositions ignifuges à base de polymères spécifiques contenant au moins 40% de certains copolymères spécifiques. Les constituants de base de ces compositions sont un silicone et une charge sous la forme d'un composé quelconque d'un métal du groupe IIA du tableau périodique des éléments. Cette charge peut être recouverte d'un sel organométallique servant à favoriser la dispersion de la charge dans le mélange et intimement lié à cette dernière au sein du matériau ignifuge. Ces compositions n'ont un bon comportement au feu que si elles contiennent les copolymères spécifiques mentionnés, et ce en quantité très importante. Si elles contiennent des polymères communs, leur Indice Limite d'Oxygène (ILO) n'est plus que de l'ordre de 25.

Le brevet US-4 273 691 décrit également des compositions ignifuges à base de polyoléfines, qui contiennent un silicone ainsi qu'un sel d'un métal du groupe IIA du tableau périodique des éléments, tel que le stéarate de magnésium, et qui sont également prévues pour l'isolation de câbles. Ce brevet mentionne que de la silice ou de l'argile peuvent être incorporées en tant que charges dans la composition ignifuge, mais ce en très faible quantité (inférieure à 5 parts en poids pour 100 parts de matériau de base).

Les compositions décrites dans le brevet US-4 273 691 ont un comportement au feu bien moins bon que celles du document FR-2 678 942 : I'ILO est de l'ordre de 26,5 au plus d'après le document US-4 273 691 alors qu'il est de l'ordre de 35 au moins pour les compositions du document FR-2 678 942.

Les exigences des acquéreurs de câbles qui souhaitent éviter la propagation de la flamme le long du câble, même posé à la verticale, en cas d'incendie, et empêcher un écoulement goutte à goutte du matériau isolant fondu à des températures élevées, et ce après un temps d'inflammation (c'est-à-dire la durée d'application de la flamme nécessaire pour enflammer l'échantillon) - de l'ordre de 10 secondes - beaucoup plus long que ce qui était pratiqué auparavant (environ 3 secondes), ne sont pas satisfaites de façon suffisante par les compositions décrites précédemment. Ainsi, même si les ILO obtenus avec certaines des compositions de l'art antérieur dépassent 35, de telles valeurs sont obtenues après des temps d'inflammation courts, et l'on n'obtiendrait pas ces valeurs avec des temps d'inflammation plus longs, qui permettent d'obtenir une bonne corrélation entre les résultats des tests effectués sur les échantillons de matériaux et ceux effectués sur des fils isolés à l'aide de ces matériaux.

De plus, on cherche également à l'heure actuelle à réaliser des compositions résistant au feu le moins onéreuses possible.

Le but de la présente invention est donc, outre de mettre au point de nouvelles compositions à haute résistance à la propagation du feu, d'améliorer la tenue au feu, même après des temps d'inflammation longs, des compositions de l'art antérieur, notamment de celles du type décrit dans le document FR-2 678 942.

En d'autres termes, la présente invention a pour objet de répondre aux exigences mentionnées ci-dessus en mettant au point une solution pour garantir la résistance à la propagation de la flamme et la prévention d'un écoulement goutte à goutte, par exemple en cas d'incendie, des matériaux isolants utilisés dans l'industrie des câbles, notamment des câbles d'énergie, mais également des câbles de télécommunications, optiques ou autres.

La présente invention propose à cet effet une composition à haute résistance à la propagation du feu, comprenant un polymère de revêtement traditionnel d'isolation et/ou de protection de câbles, appelé matériau de base, dans lequel sont incorporés :
- une charge sous forme d'un composé ni hydroxyde ni hydraté d'un métal du groupe IIA du tableau périodique des éléments,
- un silicone,
- un sel d'un métal,
**caractérisée en ce que** ledit métal est sélectionné parmi le calcium, le magnésium, le baryum, le strontium, le thallium et le cérium, et en ce que ledit sel est dissocié de ladite charge au sein dudit matériau de base.

Dans les compositions selon l'invention, le sel de métal est dissocié de la charge, c'est-à-dire qu'aucun traitement préalable de la charge à l'aide du sel n'est effectué, de sorte que d'une part la charge n'est pas enrobée du sel de métal, et d'autre part, le sel de métal et le charge sont répartis dans le matériau de base sans y être nécessairement liés.

La combinaison de la charge, du silicone et du sel de métal selon l'invention non seulement répond aux exigences actuelles appliquées aux compositions à haute résistance à la propagation du feu notamment pour l'utilisation comme revêtement et/ou isolation de câbles, mais augmente également considérablement I'ILO pour des temps d'inflammation supérieurs à 10 secondes. L'écoulement goutte à goutte du matériau isolant formant par exemple une gaine de câble, ne se produit pas avec une composition selon l'invention en cas d'incendie. D'autre part, la composition selon l'invention offre, en relation avec les polymères utilisés comme matériaux de base, de bonnes propriétés aussi bien mécaniques qu'électriques. Du fait du choix des constituants de la composition, le mélange peut être fabriqué à un prix intéressant, transformé sur des équipements courants et connus, et les matériaux non utilisés peuvent également sans problème être recyclés.

Plus particulièrement, on a constaté que l'utilisation des sels de métaux spécifiques de l'invention, et notamment de ceux obtenus à partir d'acides carboxyliques ou dicarboxyliques, est particulièrement avantageuse et accroît de manière sensible la résistance à la propagation du feu des compositions de l'art antérieur. On peut ainsi obtenir, avec les compositions selon l'invention, des Indices Limites d'Oxygène (ILO) supérieurs à 40, et ce même pour des temps d'inflammation supérieurs à 10 secondes.

Les sels de métaux selon l'invention permettent notamment d'utiliser le système charge/silicone dans n'importe quel polymère (homopolymère, élastomère thermoplastique, copolymère, etc...), ce qui permet de réaliser des compositions peu onéreuses, en choisissant les polymères les moins onéreux.

Ceci peut s'expliquer par le fait que ces sels spécifiques, qui migrent vers la surface du matériau de base en cas d'incendie, comme ceux utilisés dans les compositions connues, et se décomposent en donnant un résidu minéral venant renforcer la barrière minérale formée à la surface du matériau de base, ont un point de fusion assez bas, de l'ordre de 80 à 250°C, de sorte que leur décomposition a lieu très vite au début de l'incendie, la barrière minérale étant ainsi renforcée quasiment immédiatement.

Les sels préférés, qui donnent les meilleurs résultats en terme d'lLO, sont ceux à base de calcium et de magnésium. Ce sont par exemple des stéarates, des palmitates ou des oléates de ces métaux.

Les sels des métaux spécifiques de la présente invention sont de préférence choisis pour que leurs propriétés mécaniques et électriques restent compatibles avec une utilisation au sein de l'isolation d'un câble, et ont une bonne stabilité thermique aux températures de mise en oeuvre.

Avantageusement, le sel de métal a un point de fusion inférieur à la température de début de décomposition du matériau de base.

Pour que ces sels puissent remplir leur fonction énoncée ci-dessus, il est préférable que leur concentration dans la composition soit supérieure à 2 parts en poids pour 100 parts de matériau de base. Bien entendu, une composition selon l'invention peut contenir plus d'un des sels métalliques spécifiques précédents.

Avantageusement, la charge est choisie parmi le carbonate de calcium, le carbonate de magnésium et le talc.

On peut expliquer le rôle essentiel de la charge par le fait que, à température élevée, elle s'agrège et crée une structure à propriétés capillaires qui absorbe tout matériau fluide sous-jacent, et notamment le silicone et le sel de métal, ce qui permet à ces derniers de migrer vers la surface du matériau de base pour former la barrière minérale.

La charge sera de préférence présente dans les compositions selon l'invention en quantité relativement importante, typiquement entre 30 et 160 parts en poids pour 100 parts de matériau de base.

Le silicone, sous forme d'huile ou de gomme, peut être choisi parmi les polydiméthylsiloxanes, comportant de préférence des groupements insaturés pour favoriser la réticulation, les polyméthylphénylsiloxanes, les polyméthylalkylsiloxanes, les polydiphénylsiloxanes, les polysiloxanes terminés par des groupements fonctionnels réactifs tels que les groupements amine, acétoxy ou alkoxy.

Tous ces silicones sont peu compatibles avec le matériau de base et ont tendance à migrer vers la surface de ce dernier en cas d'incendie, en formant une couche de silice qui renforce la barrière minérale et protège le charbonnement qui se forme.

Le silicone sera de préférence présent dans les compositions selon l'invention en quantité importante, typiquement entre 2 et 20 parts en poids pour 100 parts de matériau de base.

Les matériaux de base utilisables dans les compositions de la présente invention peuvent être, dans un premier mode de mise en oeuvre, des homopolymères tels que par exemple les polyoléfines haute ou basse densité, notamment le polyéthylène haute densité, basse densité, très faible densité et ultra faible densité, le polypropylène, le polybutylène téréphtalate, les polyamides, les polycarbonates. Cette liste n'est pas limitative, et de nombreux homopolymères peuvent être employés dans le cadre de la présente invention. Tous les homopolymères mentionnés dans le document FR-2 678 942 ou dans le brevet US-4 273 691, dont les contenus sont incorporés ici par référence, sont notamment utilisables.

De manière tout à fait avantageuse, lorsque les compositions de la présente invention sont à base d'un ou de plusieurs homopolymères, on observe des ILO supérieurs à 30 après un temps d'inflammation supérieur à 10 secondes, et de l'ordre de 34 lorsque le sel utilisé est le stéarate de magnésium.

Le matériau de base peut être constitué d'un mélange d'un ou plusieurs de ces homopolymères, ou encore d'un mélange d'un ou plusieurs de ces homopolymères par exemple avec un ou plusieurs des matériaux additionnels suivants :
- un copolymère du type de ceux décrits par exemple dans le document EP-0 393 959 dont le contenu est incorporé ici par référence,
- un terpolymère,
- un polymère greffé à l'aide d'un groupement polaire, comme un groupement anhydride ou acide carboxylique.

Ce matériau additionnel sert à améliorer la compatibilité du matériau de base avec les autres constituants de la composition, ce qui permet d'améliorer encore la tenue au feu de cette dernière. Le matériau additionnel est ajouté de préférence en faible quantité au matériau de base, avec 1 à 20 parts pour 100 parts de matériau de base.

Les matériaux de base utilisables dans les compositions de la présente invention peuvent être également, dans un second mode de réalisation de l'invention, des copolymères, tels que ceux décrits par exemple dans le document EP-0 393 959 mentionné ci-dessus. On préférera encore, dans le cadre de la présente invention, les copolymères susceptibles de réagir avec la charge en entraînant la formation de carbone à leur surface en cas d'incendie (charbonnement). Ces copolymères sont par exemple les suivants : copolymères d'éthylène alkyl acrylate ou copolymère d'éthylène vinyl acétate.

Le matériau de base peut être constitué d'un mélange d'un ou plusieurs de ces homopolymères, ou encore d'un mélange d'un ou plusieurs de ces homopolymères par exemple avec un ou plusieurs des matériaux additionnels suivants :
- un terpolymère,
- un polymère greffé à l'aide d'un groupement polaire, par exemple un groupement anhydride ou acide carboxylique.

Le matériau additionnel joue le même rôle que dans le premier mode de réalisation, et sa concentration préférentielle est semblable à celle du premier mode de réalisation.

Le matériau de base peut également être un élastomère thermoplastique comprenant ou non des matériaux additionnels tels que ceux mentionnés ci-dessus. Ce peut être par exemple un mélange de polypropylène et d'éthylène propylène diène monomère (EPDM) réticulé.

On comprend bien que les trois constituants (charge, sel de métal, silicone) sont essentiels pour former à la surface du matériau en train de brûler une barrière qui réduit les échanges entre l'oxygène de l'air et les matériaux combustibles.

Si l'on attache une importance particulière à la flexibilité du produit fini en même temps qu'à sa résistance à la propagation de la flamme, il peut être avantageux d'utiliser comme matériau de base un élastomère thermoplastique ou un élastomère polyoléfinique.

Dans une composition particulièrement avantageuse de la présente invention, la charge est le carbonate de calcium et le sel de métal est un stéarate de magnésium. Le stéarate de magnésium permet notamment d'utiliser le système carbonate de calcium/silicone dans n'importe quel polymère (homopolymère, élastomère thermoplastique, copolymère, etc...).

Une composition préférée selon l'invention est la suivante, pour 100 parts de matériau de base :
- 30 à 160 parts de CaCO₃
- 2 à 20 parts de silicone
- 2 à 15 parts de sel métallique d'un acide carboxylique.

Plus particulièrement, la composition précédente est très avantageuse lorsqu'elle comprend, pour 100 parts de matériau de base :
- 50 à 100 parts de CaCO₃
- 10 à 20 parts de silicone
- 4 à 7 parts de stéarate de magnésium.

Les compositions selon l'invention sont utilisables en tant que matériaux isolants, matériaux de gaine, et également matériaux de remplissage à l'intérieur des câbles.

Indépendamment de la résistance à la propagation de la flamme visée par l'invention, les compositions selon l'invention peuvent être non réticulables ou réticulables.

Lorsque ces compositions sont réticulables, il est préférable d'effectuer une réticulation par irradiation plutôt qu'une réticulation péroxydique, qui risque d'entraîner une co-réticulation du silicone avec le matériau de base, ce qui empêcherait le silicone de migrer vers la surface en cas d'incendie, et de jouer son rôle essentiel dans l'ignifugation de la composition selon l'invention.

Bien entendu, toutes les compositions selon l'invention contiennent également des agents classiques utilisés dans les compositions ignifuges notamment pour faciliter la fabrication du mélange, prévenir le vieillissement et l'oxydation, etc... Ces agents sont bien connus de l'homme de l'art et ne seront donc pas décrits ici en détail.

L'invention sera expliquée en détails à l'aide des exemples ci-après de compositions selon l'invention, donnés à titre illustratif et nullement limitatif.

Les exemples I, II et V à VIII concernent plus particulièrement des compositions pouvant servir d'isolation et/ou de protection pour des câbles, tandis que les exemples III et IV se rapportent plus particulièrement à des matériaux pouvant servir de gaine ou d'isolant pour des conduites souples.

### Exemple I

### Composition

Polyéthylène linéaire: 80 à 100 parts
Polyéthylène greffé d'anhydride maléique : 2 à 12 parts
Huile de silicone (par exemple 12500 ST de la société Dow) : 7 à 20 parts
Craie (CaCO₃) : 70 à 100 parts
Stéarate de magnésium : 5 à 10 parts
Agent antivieillissement/antioxydant : 0,6 part

### Propriétés

Résistance à la traction (MPa) : 10,8
Elongation à la rupture (%) : 725
Résistance à la traction (MPa) après 7 jours à 80°C : 9,2
Elongation à la rupture (%) après 7 jours à 80°C : 640
ILO (Indice Limite d'Oxygène) après un temps d'inflammation de 10 secondes : 32
Déformation sous pression à 80° C (%) : 5

Ce mélange peut être fabriqué sans problème et à un prix intéressant du fait de ses bonnes propriétés thermomécaniques, et est recyclable.

### Exemple II

### Composition

Polyéthylène basse densité (0,918) : 65 à 80 parts
Polyéthylène basse densité (0,918) : 15 à 30 parts
Polyéthylène greffé d'anhydride maléique : 2 à 12 parts
Huile de silicone (par exemple 10000 ST de la société Dow) : 7 à 20 parts
Craie (CaCO₃) : 70 à 120 parts
Stéarate de magnésium : 4 à 8 parts
Agent antivieillissement/antioxydant : 0,6 part

### Propriétés

Résistance à la traction (MPa) : 9,7
Elongation à la rupture (%) : 700
Résistance à la traction (MPa) après 7 jours à 80°C : 8,7
Elongation à la rupture (%) après 7 jours à 80°C : 630
ILO après un temps d'inflammation de 10 secondes : 31
Déformation sous pression à 80°C (%) : 10
Tenue au feu sur fil (norme IEC 332 part 1)

Cette composition répond également aux exigences qui sont à la base de l'invention.

### Exemple III

### Composition

Elastomère polyoléfinique (ENGAGE CL 8001 de la société Dow Plastics) : 20 à 40 parts
Elastomère polyoléfinique (ENGAGE CL 8003 de la société Dow Plastics) : 60 à 80 parts
Polyéthylène greffé d'anhydride maléique : 4 à 8 parts
Caoutchouc de silicone : 5 à 18 parts
Craie : 60 à 110 parts
Stéarate de magnésium : 5 à 10 parts
Agent antivieillissement/antioxydant (Irganox 1010 de la société CIBA GEIGY) : 0,6 part

### Propriétés

Résistance à la traction (MPa) : 13,4
Elongation à la rupture (%) : 730
Résistance à la traction (MPa) après 7 jours à 80°C : 12,8
Elongation à la rupture (%) après 7 jours à 80°C : 750
ILO après un temps d'inflammation de 10 secondes : 31
Déformation sous pression à 80°C (%) : 40
Dureté Shore A : 85
Tenue au feu sur fil (norme IEC 332 part 1)

Grâce aux valeurs plus élevées de son élongation à la rupture et de sa résistance à la traction, et à sa plus grande résistance à la propagation de la flamme, cette composition est particulièrement avantageuse si elle est utilisée pour des conduites souples.

Le polyéthylène greffé d'anhydride d'acide maléique utilisé dans les exemples cités contribue à augmenter la résistance à la propagation de la flamme.

### Exemple IV

### Composition

Elastomère polyoléfinique (ENGAGE 8001 de la société Dow Plastics) : 10 à 30 parts
Elastomère polyoléfinique (ENGAGE 8003 de la société Dow Plastics) : 30 à 60 parts
Polypropylène (Hifax CA 10A de la société Montell) : 20 à 40 parts
Craie (Calcit MX 20) : 50 à 90 parts
Huile de silicone (12500 ST de la société Dow Corning) : 5 à 15 parts
Stéarate de magnésium : 3 à 10 parts
Antioxydant : 0,5 part

### Propriétés

Résistance à la traction (MPa) : 16,3
Elongation à la rupture (%) : 630
Résistance à la traction (MPa) après 7 jours à 80°C : 16,3
Elongation à la rupture (%) après 7 jours à 80°C : 650
ILO après un temps d'inflammation de 10 secondes : 30
Déformation sous pression à 80°C (%) : 40
Dureté Shore A : 87
Tenue au feu sur fil (norme IEC 332 part 1)

### Exemple V

### Composition

Polyéthylène basse densité : 77 parts
Polyéthylène greffé d'anhydride maléique : 10 parts
Carbonate de calcium : 50 parts
Silicone : 13 parts
Stéarate de magnésium : 5 parts
Antioxydant : 0,5 part

### Propriétés

ILO après un temps d'inflammation de 10 secondes : 40

### Exemple VI

### Composition

Elastomère thermoplastique (Santoprène) : 100 parts
Polyéthylène greffé d'anhydride maléique : 2 parts
Carbonate de calcium : 40 parts
Huile d'aminosilicone : 9,5 parts
Stéarate de magnésium : 6 parts
Antioxydant : 0,5 part

### Propriétés

ILO après un temps d'inflammation de 10 secondes : 33
Résistance à la traction (MPa) : 8
Elongation à la rupture (%) : 350

### Exemple VII

### Composition

Polyéthylène basse densité : 82 parts
Polyéthylène greffé d'anhydride maléique : 5 parts
Carbonate de calcium : 80 parts
Copolymère de siloxane et de méthyl hydro méthyloctyl : 13 parts
Stéarate de magnésium : 5 parts
Antioxydant : 0,5 part

### Propriétés

ILO après un temps d'inflammation de 10 secondes : 40

### Exemple VIII

### Composition

Polyéthylène : 80 parts
Polypropylène: 20 parts
Polyéthylène greffé d'anhydride maléique : 5 parts
Carbonate de magnésium MgCO₃ : 80 parts
Huile de silicone : 13 parts
Stéarate de magnésium : 5 parts
Antioxydant : 0,5 part

### Propriétés

ILO après un temps d'inflammation de 10 secondes : 32

### Exemple IX

### Composition

Copolymère d'éthylène méthyl acrylate : 100 parts
Carbonate de calcium : 80 parts
Polydiméthylsiloxane : 10 parts
Stéarate de calcium : 5 parts
Antioxydant: 0,5 part

### Propriétés

ILO après un temps d'inflammation de 10 secondes : 31

### Exemple IX

### Composition

Copolymère d'éthylène méthyl acrylate:100 parts
Carbonate de calcium : 80 parts
Polydiméthylsiloxane : 10 parts
Stéarate de baryum : 5 parts
Antioxydant: 0,5 part

### Propriétés

ILO après un temps d'inflammation de 10 secondes : 30

Toutes les compositions précédentes peuvent être utilisées comme gaine et/ou matériau isolant pour câbles électriques ou optiques, en particulier pour les produits parmi lesquels la préférence a jusqu'à présent été accordée au polychlorure de vinyle comme matériau isolant.

La combinaison des constituants :
- composé d'un métal du groupe IIA du tableau périodique des éléments
- silicone
- sel de métal tel que le calcium, le magnésium, le baryum, le strontium, le thallium et le cérium,
est à considérer dans le mélange complet comme un système dont la propriété fondamentale est de garantir la résistance à la propagation de la flamme et la résistance du mélange à un écoulement goutte à goutte aux hautes températures (par exemple en cas d'incendie), tandis que les autres constituants peuvent être choisis pour chaque utilisation selon les propriétés voulues.

En particulier, la combinaison des constituants :
- carbonate de calcium CaCO₃,
- silicone,
- stéarate de magnésium,
quelles qu'en soient les proportions dans le matériau de base, est particulièrement avantageuse dans le cadre de la présente invention. Elle conduit à des ILO d'au moins 30 même après un temps d'inflammation supérieur à 10 s et est particulièrement peu onéreuse du fait de l'utilisation du stéarate de magnésium comme sel de métal.

L'élaboration des mélanges selon l'invention peut être faite sur des installations courantes, par exemple les pétrisseurs Buss Ko ou boudineuses à deux vis, et l'extrusion sous forme de gaine extérieure, isolant, ou gaine intérieure est par exemple possible au moyen d'une ligne d'extrusion PVC classique. Les trois constituants essentiels selon l'invention peuvent être ajoutés directement au matériau de base lors de l'élaboration, mais il peut parfois également être avantageux de mélanger ces trois constituants déjà sous la forme d'un mélange au matériau de base.

Bien entendu, l'invention n'est pas limitée aux exemples de mise en oeuvre qui viennent d'être décrits, et porte dans sa généralité sur toutes les compositions envisageables à partir des indications générales fournies dans l'exposé de l'invention.

## Revendications

1. Composition à haute résistance à la propagation du feu, comprenant un polymère de revêtement traditionnel d'isolation et/ou de protection de câbles, appelé matériau de base, dans lequel sont incorporés :
- une charge sous forme d'un composé ni hydroxyde ni hydraté d'un métal du groupe IIA du tableau périodique des éléments,
- un silicone,
- un sel d'un métal,
**caractérisée en ce que** ledit métal est sélectionné parmi le calcium, le magnésium, le baryum, le strontium, le thallium et le cérium, et en ce que ledit sel est dissocié de ladite charge au sein dudit matériau de base.

2. Composition selon la revendication 1 caractérisée en ce que ledit sel y est présent avec une concentration supérieure à 2 parts en poids pour 100 parts de matériau de base.

3. Composition selon l'une des revendications 1 ou 2 caractérisée en ce que ledit sel a un point de fusion inférieur à la température de début de décomposition du matériau de base.

4. Composition selon l'une des revendications 1 à 3 caractérisée en ce que ledit sel est choisi parmi un sel obtenu à partir d'un acide carboxylique et un sel obtenu à partir d'un acide dicarboxylique.

5. Composition selon l'une des revendications 1 à 3 caractérisée en ce que ledit sel est choisi parmi un stéarate, un palmitate et un oléate de l'un desdits métaux.

6. Composition selon la revendication 5 caractérisée en ce que ledit sel est choisi parmi un stéarate de calcium et un stéarate de magnésium.

7. Composition selon l'une des revendications 1 à 6 caractérisée en ce que ladite charge y est présente avec une concentration en poids comprise entre 30 et 160 parts pour 100 parts de matériau de base.

8. Composition selon l'une des revendications 1 à 7 caractérisée en ce que ladite charge est choisie parmi le carbonate de calcium, le carbonate de magnésium et le talc.

9. Composition selon l'une des revendications 1 à 8 caractérisée en ce que le silicone, sous forme d'huile ou de gomme, est choisi parmi les polydiméthylsiloxanes, les polyméthylphénylsiloxanes, les polyméthylalkylsiloxanes, les polydiphénylsiloxanes, les polysiloxanes terminés par des groupements fonctionnels réactifs tels que les groupements amine, acétoxy ou alkoxy.

10. Composition selon l'une des revendications 1 à 9 caractérisée en ce que le silicone y est présent avec une concentration en poids comprise entre 2 et 20 parts pour 100 parts de matériau de base.

11. Composition selon l'une des revendications 1 à 10 caractérisée en ce que ledit matériau de base comprend un homopolymère ou un mélange de plusieurs homopolymères.

12. Composition selon la revendication 11 caractérisée en ce que ledit matériau de base contient un matériau additionnel choisi parmi un copolymère, un terpolymère et un polymère greffé à l'aide d'un groupement polaire.

13. Composition selon l'une des revendications 1 à 12 caractérisée en ce que ledit matériau de base comprend un copolymère ou un mélange de plusieurs copolymères.

14. Composition selon la revendication 13 caractérisée en ce que ledit matériau de base contient un matériau additionnel choisi parmi un terpolymère et un polymère greffé à l'aide d'un groupement polaire.

15. Composition selon les revendications 12 et 14 caractérisée en ce que ledit groupement polaire est choisi parmi un groupement anhydride et un groupement acide carboxylique.

16. Composition selon l'une des revendications 1 à 15 caractérisée en ce que ladite charge est le carbonate de calcium et ledit sel un stéarate de magnésium.

17. Composition selon l'une des revendications 1 à 15 caractérisée en ce qu'elle comprend, pour 100 parts en poids de matériau de base :
- 30 à 160 parts de CaCO₃
- 2 à 20 parts de silicone
- 2 à 15 parts de sel métallique.

18. Composition selon l'une des revendications 1 à 15 caractérisée en ce qu'elle comprend, pour 100 parts en poids de matériau de base :
- 50 à 100 parts de CaCO₃
- 7 à 20 parts de silicone
- 4 à 7 parts de sel métallique.

19. Composition selon l'une des revendications 17 ou 18 caractérisée en ce qu'elle comprend en outre 4,5 à 6,5 parts d'un polyéthylène greffé d'anhydride maléique.

20. Composition selon l'une des revendications 1 à 19 caractérisée en ce que ledit matériau de base est un élastomère thermoplastique.

21. Composition selon l'une des revendications 1 à 19 caractérisée en ce que ledit matériau de base est un élastomère polyoléfinique.

22. Composition selon l'une des revendications 1 à 21 caractérisée en ce que ledit matériau de base est réticulable.

23. Composition selon l'une des revendications 1 à 22 caractérisée en ce que ledit silicone a une viscosité comprise entre 10 000 et 1 000 000 centistokes.
